# EUROPÄISCHE PATENTSCHRIFT

(11) **EP 3 441 137 B1**
(45) Veröffentlichungstag und Bekanntmachung des Hinweises auf die Patenterteilung: **25.12.2019**
(21) Anmeldenummer: 17185340.1
(22) Anmeldetag: 08.08.2017
(51) Int. Cl.: B01J 10/00, C01B 32/39

(54) **PD-KATALYSIERTEN ZERSETZUNG VON AMEISENSÄURE**
THE PD-CATALYTIC DECOMPOSITION OF FORMIC ACID
DÉCOMPOSITION D'ACIDE FORMIQUE CATALYSÉ PAR LE PALLADIUM

(43) Veröffentlichungstag der Anmeldung: 13.02.2019
(73) Patentinhaber: Evonik Operations GmbH, 45128 Essen (DE)
(72) Erfinder: SANG, Rui, 252000 Liaocheng City, Shandong Province (CN); LIU, Jie, 412100 Zhuzhou, Hunan (CN); DONG, Kaiwu, 236800 Bo Zhou (CN); JACKSTELL, Ralf, 10106 Rostock (DE); BELLER, Matthias, 18211 Ostseebad Nienhagen (DE); FRANKE, Robert, 45772 Marl (DE)
(74) Vertreter: Evonik Patent Association

(56) Entgegenhaltungen:
- US-A- 3 488 383
- W. SUPRONOWICZ ET AL: "Formic acid: a future bridge between the power and chemical industries", GREEN CHEMISTRY, Bd. 17, Nr. 5, 27. Februar 2015 (2015-02-27), Seiten 2904-2911, XP55201222, ISSN: 1463-9262, DOI: 10.1039/C5GC00249D
- KAIWU DONG ET AL: "Palladium-Catalyzed Carbonylation of sec - and tert -Alcohols", ANGEWANDTE CHEMIE INTERNATIONAL EDITION, Bd. 56, Nr. 22, 21. April 2017 (2017-04-21), Seiten 6203-6207, XP55426870, ISSN: 1433-7851, DOI: 10.1002/anie.201701950

## Beschreibung

Die Erfindung betrifft ein Verfahren zur Pd-katalysierten Zersetzung von Ameisensäure (HCOOH).

Ameisensäure wird in chemischen Reaktion beispielsweise als Säure oder Lösungsmittel zugesetzt, kann aber auch als Nebenprodukt einer Reaktion anfallen. Aufgrund ihrer ätzenden oder stark riechenden Eigenschaften kann es wünschenswert sein, die Ameisensäure zu entfernen. Green Chem. 2015, 17, 2904 offenbart die SiO₂:Al₂O₃ Zeolith-katalysierten Zersetzung von Ameisensäure. US3488383 offenbart die Gruppe 8 Metall-katalysierten Zersetzung von Ameisensäure.

Der Erfindung lag die Aufgabe zugrunde, ein Verfahren bereitzustellen, bei welchem Ameisensäure mit Hilfe eines katalysierten Verfahrens effizient zersetzt wird.

Gelöst wird die Aufgabe durch ein Verfahren gemäß Anspruch 1.

Verfahren umfassend die Verfahrensschritte:
a) Vorhanden sein von Ameisensäure;
b) Zugabe einer Verbindung, welche Pd umfasst, wobei das Pd in der Lage ist einen Komplex auszubilden;
c) Zugabe einer Verbindung der allgemeinen Formel (**I**): 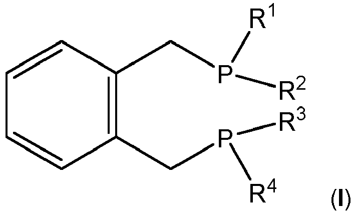 wobei R¹, R², R³, R⁴ jeweils unabhängig voneinander ausgewählt sind aus: -H, -(C₁-C₁₂)-Alkyl,-O-(C₁-C₁₂)-Alkyl, -(C₄-C₁₄)-Aryl, -O-(C₄-C₁₄)-Aryl, Cycloalkyl, -(C₁-C₁₂)-Heteroalkyl, -O-(C₁-C₁₂)-Heteroalkyl, -(C₃-C₁₄)-Heteroaryl, -O-(C₃-C₁₄)-Heteroaryl, -COO-Alkyl, -COO-Aryl, -C-O-Alkyl, -C-O-Aryl, NH₂, Halogen und die Reste auch zur Bildung eines größeren kondensierten Ringes befähigt sind;
   wobei die genannten Alkylgruppen, Arylgruppen, Cycloalkyl, Heteroalkylgruppen, Heteroarylgruppen wie folgt substituiert sein können:
   -(C₁-C₁₂)-Alkyl, -O-(C₁-C₁₂)-Alkyl, Halogen;
   und mindestens einer der Reste R¹, R², R³, R⁴ nicht für Phenyl steht;
d) Zugabe von MeOH;
e) Erhitzen des Reaktionsgemischen, wobei die Ameisensäure zersetzt wird.

In einer Variante des Verfahrens ist die Verbindung in Verfahrensschritt b) ausgewählt aus:
Pd(acac)₂, PdCl₂, Pd(dba)₃*CH₃Cl (dba = Dibenzylidenaceton), Pd(OAc)₂, Pd(TFA)₂, Pd(CH₃CN)Cl₂.

In einer Variante des Verfahrens ist die Verbindung in Verfahrensschritt b) Pd(OAc)₂.

In einer Variante des Verfahrens umfasst das Verfahren den zusätzlichen Verfahrensschritt f): f) Zugabe einer Säure.

In einer Variante des Verfahrens ist die Säure in Verfahrensschritt f) ausgewählt aus: H₂SO₄, CH₃SO₃H, CF₃SO₃H, PTSA.

In einer Variante des Verfahrens ist die Säure in Verfahrensschritt f) PTSA.

In einer Variante des Verfahrens sind R¹, R², R³, R⁴ jeweils unabhängig voneinander ausgewählt aus: -(C₁-C₁₂)-Alkyl, -O-(C₁-C₁₂)-Alkyl, -(C₄-C₁₄)-Aryl, -O-(C₄-C₁₄)-Aryl, Cycloalkyl, -(C₁-C₁₂)-Heteroalkyl, -O-(C₁-C₁₂)-Heteroalkyl, -(C₃-C₁₄)-Heteroaryl, -O-(C₃-C₁₄)-Heteroaryl, -COO-Alkyl,-COO-Aryl, -C-O-Alkyl, -C-O-Aryl, NH₂, Halogen und die Reste auch zur Bildung eines größeren kondensierten Ringes befähigt sind;
wobei die genannten Alkylgruppen, Arylgruppen, Cycloalkyl, Heteroalkylgruppen, Heteroarylgruppen wie folgt substituiert sein können:
-(C₁-C₁₂)-Alkyl, -O-(C₁-C₁₂)-Alkyl, Halogen;
und mindestens einer der Reste R¹, R², R³, R⁴ nicht für Phenyl steht.

In einer Variante des Verfahrens sind R¹, R², R³, R⁴ jeweils unabhängig voneinander ausgewählt aus: -(C₁-C₁₂)-Alkyl, -(C₄-C₁₄)-Aryl, Cycloalkyl, -(C₁-C₁₂)-Heteroalkyl, -(C₃-C₁₄)-Heteroaryl, Halogen und die Reste auch zur Bildung eines größeren kondensierten Ringes befähigt sind; wobei die genannten Alkylgruppen, Arylgruppen, Cycloalkyl, Heteroalkylgruppen, Heteroarylgruppen wie folgt substituiert sein können:
-(C₁-C₁₂)-Alkyl, -O-(C₁-C₁₂)-Alkyl, Halogen;
und mindestens einer der Reste R¹, R², R³, R⁴ nicht für Phenyl steht.

In einer Variante des Verfahrens sind R¹, R², R³, R⁴ jeweils unabhängig voneinander ausgewählt aus: -(C₁-C₁₂)-Alkyl, Cycloalkyl, -(C₃-C₁₄)-Heteroaryl und die Reste auch zur Bildung eines größeren kondensierten Ringes befähigt sind;
wobei die genannten Alkylgruppen, Cycloalkyl, Heteroarylgruppen wie folgt substituiert sein können:
-(C₁-C₁₂)-Alkyl, -O-(C₁-C₁₂)-Alkyl, Halogen,
und mindestens einer der Reste R¹, R², R³, R⁴ nicht für Phenyl steht.

In einer Variante des Verfahrens sind R¹, R⁴ jeweils unabhängig voneinander ausgewählt aus: - (C₁-C₁₂)-Alkyl, Cycloalkyl und die Reste auch zur Bildung eines größeren kondensierten Ringes befähigt sind;
wobei die genannten Alkylgruppen, Cycloalkyl wie folgt substituiert sein können:
-(C₁-C₁₂)-Alkyl, -O-(C₁-C₁₂)-Alkyl, Halogen.

In einer Variante des Verfahrens stehen jeweils unabhängig voneinander für -(C₃-C₁₄)-Heteroaryl,
wobei die genannten Heteroarylgruppen wie folgt substituiert sein können:
-(C₁-C₁₂)-Alkyl, -O-(C₁-C₁₂)-Alkyl, Halogen.

In einer Variante des Verfahrens ist die Verbindung der allgemeinen Formel (**I**) ausgewählt aus den Strukturen (**1**) bis (**3**):

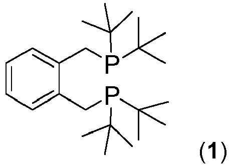

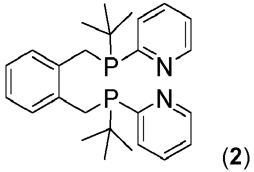

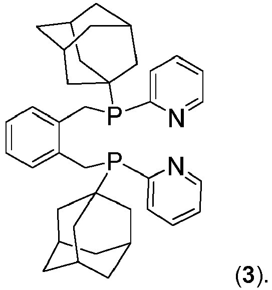

In einer Variante des Verfahrens ist die Verbindung der allgemeinen Formel (**I**) die Struktur (**2**):

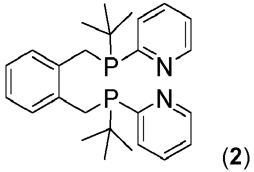

In einer Variante des Verfahrens ist die Verbindung der allgemeinen Formel (**I**) die Struktur (**3**):

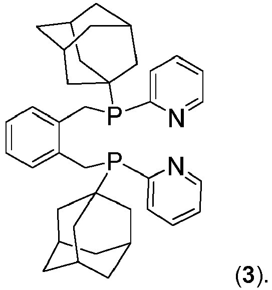

Im Folgenden wird die Erfindung anhand von Ausführungsbeispielen näher erläutert.

### Untersuchung der Pd-katalysierten Zersetzung von Ameisensäure

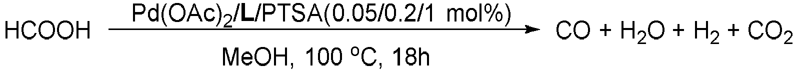

Unter einer Argonatmosphäre wurden [Pd(OAc)₂] (4.48 mg, 0.02 mmol, 0.05 mol%), Ligand L (0.08 mmol, 0.2 mol%), PTSA·H₂O (76 mg, 0.4mmol, 1.0 mol%) in einen Autoklaven gegeben. (Entsprechend der nachfolgenden Tabelle wurde in den einzelnen Versuchen auf die Zugabe einzelner Bestandteile verzichtet.) Anschließend wurde mit einer Spritze MeOH (6.5 ml) und HCOOH (40 mmol, 1.50 ml) injiziert. Danach wurde der Autoklav dreimal mit Stickstoff (5 bar) gespült. Das Reaktionsgemisch wurde auf 100 °C erhitzt und die Temperatur für 18 h gehalten. Nach dieser Zeit wurde der Autoklav auf Raumtemperatur abgekühlt.

Der Druck wurde durch elektronische Aufzeichungssonden des Autoklavendrucks gemessen. Die Selektivität von CO, H₂ und CO₂ wurde durch Gas-GC-Analyse bestimmt.

In der folgenden Tabelle sind die Ergebnisse zusammengefasst:

**Tabelle:**

| Pd | **L** | PTSA | Gesamtdruck (bar) | CO (bar, %) | H2 (bar, %) | CO₂ (bar, %) |
|---|---|---|---|---|---|---|
| - | - | - | 0.3 | 0.009,3 | 0.147,49 | 0.144,48 |
| + | - | - | 0.4 | 0.020,5 | 0.192,48 | 0.188,47 |
| - | - | + | 0.2 | 0.020, 10 | 0.092,46 | 0.088,44 |
| - | **L4** | - | 0.5 | 0.055, 11 | 0.28, 56 | 0.165, 33 |
| + | - | + | 0.2 | 0.012,6 | 0.126,63 | 0.062,31 |
| + | **L4** | - | 2.2 | 1.474,67 | 0.396, 18 | 0.330, 15 |
| + | **L4** | + | 5.5 | 4.840, 88 | 0.385, 7 | 0.275, 5 |
| + | **L3** | + | 2.2 | 1.914,87 | 0.176,8 | 0.110,5 |
| + | **L5** | + | 6.0 | 5.04, 84 | 0.54, 9 | 0.42, 7 |
| - | **L3** | - | 0.8 | 0.24, 30 | 0.32, 40 | 0.24, 30 |

| | | | | | | |
|---|---|---|---|---|---|---|
| +: zugegeben -: nicht zugegeben | | | | | | |

Wie die oben beschriebenen Versuche zeigen, wird die Aufgabe durch ein erfindungsgemäßes Verfahren gelöst.

## Patentansprüche

1. Verfahren umfassend die Verfahrensschritte:
a) Vorhanden sein von Ameisensäure;
b) Zugabe einer Verbindung, welche Pd umfasst, wobei das Pd in der Lage ist einen Komplex auszubilden;
c) Zugabe einer Verbindung der allgemeinen Formel (**I**): 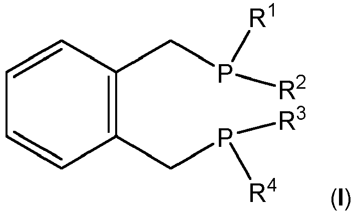 wobei R¹, R², R³, R⁴ jeweils unabhängig voneinander ausgewählt sind aus: -H, -(C₁-C₁₂)-Alkyl,-O-(C₁-C₁₂)-Alkyl, -(C₄-C₁₄)-Aryl, -O-(C₄-C₁₄)-Aryl, Cycloalkyl, -(C₁-C₁₂)-Heteroalkyl, -O-(C₁-C₁₂)-Heteroalkyl, -(C₃-C₁₄)-Heteroaryl, -O-(C₃-C₁₄)-Heteroaryl, -COO-Alkyl, -COO-Aryl, -C-O-Alkyl, -C-O-Aryl, NH₂, Halogen und die Reste auch zur Bildung eines größeren kondensierten Ringes befähigt sind;
wobei die genannten Alkylgruppen, Arylgruppen, Cycloalkyl, Heteroalkylgruppen, Heteroarylgruppen wie folgt substituiert sein können:
-(C₁-C₁₂)-Alkyl, -O-(C₁-C₁₂)-Alkyl, Halogen;
und mindestens einer der Reste R¹, R², R³, R⁴ nicht für Phenyl steht;
d) Zugabe von MeOH;
e) Erhitzen des Reaktionsgemischen, wobei die Ameisensäure zersetzt wird.

2. Verfahren nach Anspruch 1,
wobei die Verbindung in Verfahrensschritt b) ausgewählt ist aus:
Pd(acac)₂, PdCl₂, Pd(dba)₃*CH₃Cl (dba = Dibenzylidenaceton), Pd(OAc)₂, Pd(TFA)₂, Pd(CH₃CN)Cl₂.

3. Verfahren nach einem der Ansprüche 1 oder 2,
wobei die Verbindung in Verfahrensschritt b) Pd(OAc)₂ ist.

4. Verfahren nach einem der Ansprüche 1 bis 3,
wobei das Verfahren den zusätzlichen Verfahrensschritt f) umfasst:
f) Zugabe einer Säure.

5. Verfahren nach Anspruch 4,
wobei die Säure in Verfahrensschritt f) ausgewählt ist aus: H₂SO₄, CH₃SO₃H, CF₃SO₃H, PTSA.

6. Verfahren nach einem der Ansprüche 4 oder 5,
wobei die Säure in Verfahrensschritt f) PTSA ist.

7. Verfahren nach einem der Ansprüche 1 bis 6,
wobei R¹, R², R³, R⁴ jeweils unabhängig voneinander ausgewählt sind aus: -(C₁-C₁₂)-Alkyl, -O-(C₁-C₁₂)-Alkyl, -(C₄-C₁₄)-Aryl, -O-(C₄-C₁₄)-Aryl, Cycloalkyl, -(C₁-C₁₂)-Heteroalkyl, -O-(C₁-C₁₂)-Heteroalkyl, -(C₃-C₁₄)-Heteroaryl, -O-(C₃-C₁₄)-Heteroaryl, -COO-Alkyl, -COO-Aryl, -C-O-Alkyl, -C-O-Aryl, NH₂, Halogen und die Reste auch zur Bildung eines größeren kondensierten Ringes befähigt sind;
wobei die genannten Alkylgruppen, Arylgruppen, Cycloalkyl, Heteroalkylgruppen, Heteroarylgruppen wie folgt substituiert sein können:
-(C₁-C₁₂)-Alkyl, -O-(C₁-C₁₂)-Alkyl, Halogen;
und mindestens einer der Reste R¹, R², R³, R⁴ nicht für Phenyl steht.

8. Verfahren nach einem der Ansprüche 1 bis 7,
wobei R¹, R², R³, R⁴ jeweils unabhängig voneinander ausgewählt sind aus: -(C₁-C₁₂)-Alkyl, -(C₄-C₁₄)-Aryl, Cycloalkyl, -(C₁-C₁₂)-Heteroalkyl, -(C₃-C₁₄)-Heteroaryl, Halogen und die Reste auch zur Bildung eines größeren kondensierten Ringes befähigt sind;
wobei die genannten Alkylgruppen, Arylgruppen, Cycloalkyl, Heteroalkylgruppen, Heteroarylgruppen wie folgt substituiert sein können:
-(C₁-C₁₂)-Alkyl, -O-(C₁-C₁₂)-Alkyl, Halogen;
und mindestens einer der Reste R¹, R², R³, R⁴ nicht für Phenyl steht.

9. Verfahren nach einem der Ansprüche 1 bis 8,
wobei R¹, R², R³, R⁴ jeweils unabhängig voneinander ausgewählt sind aus: -(C₁-C₁₂)-Alkyl, Cycloalkyl, -(C₃-C₁₄)-Heteroaryl und die Reste auch zur Bildung eines größeren kondensierten Ringes befähigt sind;
wobei die genannten Alkylgruppen, Cycloalkyl, Heteroarylgruppen wie folgt substituiert sein können:
-(C₁-C₁₂)-Alkyl, -O-(C₁-C₁₂)-Alkyl, Halogen,
und mindestens einer der Reste R¹, R², R³, R⁴ nicht für Phenyl steht.

10. Verfahren nach einem der Ansprüche 1 bis 9,
wobei R¹, R⁴ jeweils unabhängig voneinander ausgewählt sind aus: -(C₁-C₁₂)-Alkyl, Cycloalkyl und die Reste auch zur Bildung eines größeren kondensierten Ringes befähigt sind;
wobei die genannten Alkylgruppen, Cycloalkyl wie folgt substituiert sein können:
-(C₁-C₁₂)-Alkyl, -O-(C₁-C₁₂)-Alkyl, Halogen.

11. Verfahren nach einem der Ansprüche 1 bis 10,
wobei R², R³ jeweils unabhängig voneinander für -(C₃-C₁₄)-Heteroaryl stehen,
wobei die genannten Heteroarylgruppen wie folgt substituiert sein können:
-(C₁-C₁₂)-Alkyl, -O-(C₁-C₁₂)-Alkyl, Halogen.

12. Verfahren nach einem der Ansprüche 1 bis 11,
wobei die Verbindung der allgemeinen Formel (**I**) ausgewählt ist aus den Strukturen (**1**) bis (**3**):

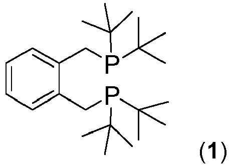

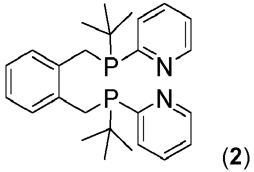

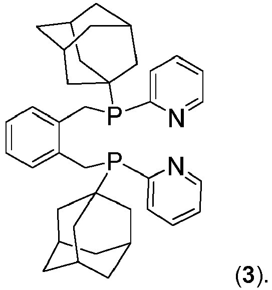

13. Verfahren nach einem der Ansprüche 1 bis 12,
wobei die Verbindung der allgemeinen Formel (**I**) die Struktur (**2**) ist:

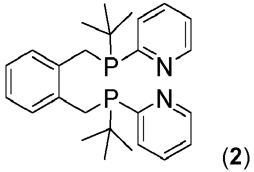

14. Verfahren nach einem der Ansprüche 1 bis 12,
wobei die Verbindung der allgemeinen Formel (**I**) die Struktur (**3**) ist:

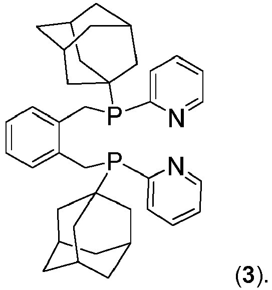

## Claims

1. Process comprising the process steps of:
a) presence of formic acid;
b) addition of a compound comprising Pd, wherein the Pd is capable of forming a complex;
c) addition of a compound of general formula (**I**): 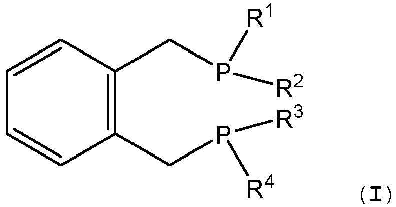 wherein R¹, R², R³, R⁴ are each independently selected from: -H, -(C₁-C₁₂) -alkyl, -O-(C₁-C₁₂) -alkyl, -(C₄-C₁₄)-aryl, -O-(C₄-C₁₄)-aryl, cycloalkyl, -(C₁-C₁₂) -heteroalkyl, -O-(C₁-C₁₂) -heteroalkyl, -(C₃-C₁₄)-heteroaryl, -O-(C₃-C₁₄)-heteroaryl, -COO-alkyl, -COO-aryl, -C-O-alkyl, -C-O-aryl, NH₂, halogen and the residues are also capable of forming a larger condensed ring;
wherein the recited alkyl groups, aryl groups, cycloalkyl, heteroalkyl groups, heteroaryl groups may be substituted as follows:
-(C₁-C₁₂)-alkyl, -O-(C₁-C₁₂)-alkyl, halogen;
and at least one of the radicals R¹, R², R³, R⁴ does not represent phenyl;
d) addition of MeOH;
e) heating of the reaction mixture to decompose the formic acid.

2. Process according to Claim 1,
wherein the compound in process step b) is selected from:
Pd(acac)₂, PdCl₂, Pd(dba)₃*CH₃Cl (dba = dibenzylideneacetone), Pd(OAc)₂, Pd(TFA)₂, Pd(CH₃CN)Cl₂.

3. Process according to either of Claims 1 and 2, wherein the compound in process step b) is Pd(OAc)₂.

4. Process according to any of Claims 1 to 3,
wherein the process comprises additional process step f) :
f) addition of an acid.

5. Process according to Claim 4,
wherein the acid in process step f) is selected from: H₂SO₄, CH₃SO₃H, CF₃SO₃H, PTSA.

6. Process according to either of Claims 4 and 5,
wherein the acid in process step f) is PTSA.

7. Process according to any of Claims 1 to 6,
wherein R¹, R², R³, R⁴ are each independently selected from: -(C₁-C₁₂)-alkyl, -O-(C₁-C₁₂)-alkyl, -(C₄-C₁₄)-aryl,-O-(C₄-C₁₄)-aryl, cycloalkyl, -(C₁-C₁₂)-heteroalkyl, -O-(C₁-C₁₂)-heteroalkyl, -(C₃-C₁₄)-heteroaryl, -O-(C₃-C₁₄)-heteroaryl, -COO-alkyl, -COO-aryl, -C-O-alkyl, -C-O-aryl, NH₂, halogen and the residues are also capable of forming a larger condensed ring;
wherein the recited alkyl groups, aryl groups, cycloalkyl, heteroalkyl groups, heteroaryl groups may be substituted as follows:
-(C₁-C₁₂)-alkyl, -O-(C₁-C₁₂)-alkyl, halogen;
and at least one of the radicals R¹, R², R³, R⁴ does not represent phenyl.

8. Process according to any of Claims 1 to 7,
wherein R¹, R², R³, R⁴ are each independently selected from: -(C₁-C₁₂)-alkyl, -(C₄-C₁₄)-aryl, cycloalkyl, -(C₁-C₁₂)-heteroalkyl, -(C₃-C₁₄)-heteroaryl, halogen and the residues are also capable of forming a larger condensed ring;
wherein the recited alkyl groups, aryl groups, cycloalkyl, heteroalkyl groups, heteroaryl groups may be substituted as follows:
-(C₁-C₁₂)-alkyl, -O-(C₁-C₁₂)-alkyl, halogen;
and at least one of the radicals R¹, R², R³, R⁴ does not represent phenyl.

9. Process according to any of Claims 1 to 8,
wherein R¹, R², R³, R⁴ are each independently selected from: -(C₁-C₁₂) -alkyl, cycloalkyl, -(C₃-C₁₄)-heteroaryl and the residues are also capable of forming a larger condensed ring;
wherein the recited alkyl groups, cycloalkyl, heteroaryl groups may be substituted as follows:
-(C₁-C₁₂)-alkyl, -O-(C₁-C₁₂)-alkyl, halogen,
and at least one of the radicals R¹, R², R³, R⁴ does not represent phenyl.

10. Process according to any of Claims 1 to 9,
wherein R¹, R⁴ are each independently selected from: - (C₁-C₁₂)-alkyl, cycloalkyl and the residues are also capable of forming a larger condensed ring;
wherein the recited alkyl groups, cycloalkyl may be substituted as follows:
-(C₁-C₁₂) -alkyl, -O-(C₁-C₁₂) -alkyl, halogen.

11. Process according to any of Claims 1 to 10,
wherein R², R³ each independently represent -(C₃-C₁₄)-heteroaryl,
wherein the recited heteroaryl groups may be substituted as follows:
-(C₁-C₁₂) -alkyl, -O-(C₁-C₁₂) -alkyl, halogen.

12. Process according to any of Claims 1 to 11,
wherein the compound of general formula (**I**) is selected from the structures (**1**) to (**3**) :

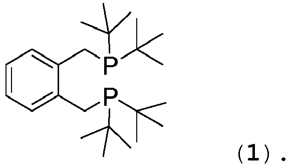

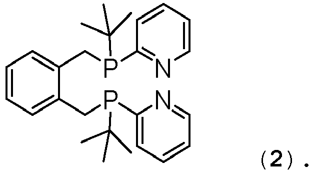

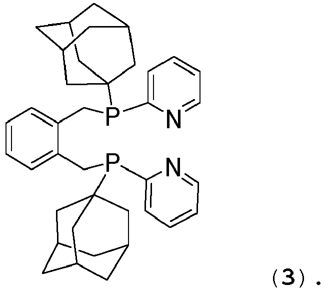

13. Process according to any of Claims 1 to 12,
wherein the compound of general formula (**I**) has the structure (**2**) :

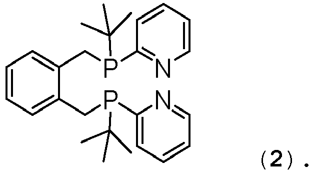

14. Process according to any of Claims 1 to 12,
wherein the compound of general formula (**I**) has the structure (**3**):

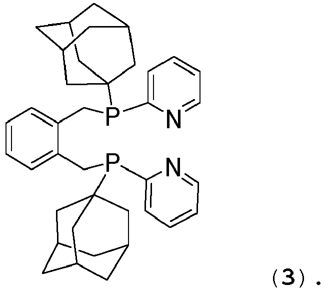

## Revendications

1. Procédé comprenant les étapes de procédé :
a) mise en place d'acide formique ;
b) ajout d'un composé, qui comprend du Pd, le Pd étant en état de former un complexe ;
c) ajout d'un composé de formule générale (I) : 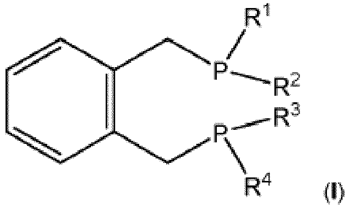 R¹, R², R³, R⁴ à chaque fois indépendamment les uns des autres étant choisis parmi : -H, -C₁₋₁₂-alkyle, -O-C₁₋₁₂-alkyle, -C₄₋₁₄-aryle, -O-C₄₋₁₄-aryle, cycloalkyle, -C₁₋₁₂-hétéroalkyle, -O-C₁₋₁₂-hétéroalkyle, -C₃₋₁₄-hétéroaryle, -O-C₃₋₁₄-hétéroaryle, -COO-alkyle, -COO-aryle, -C-O-alkyle, -C-O-aryle, NH₂, halogène et les radicaux étant aussi aptes à la formation d'un cycle condensé plus grand ;
les groupes alkyle, aryle, cycloalkyle, hétéroalkyle, hétéroaryle mentionnés pouvant être substitués comme suit :
-C₁₋₁₂-alkyle, -O-C₁₋₁₂-alkyle, halogène ;
et au moins un des radicaux R¹, R², R³, R⁴ ne représentant pas phényle ;
d) ajout de MeOH ;
e) chauffage du mélange réactionnel, l'acide formique étant décomposé.

2. Procédé selon la revendication 1,
le composé dans l'étape de procédé b) étant choisi parmi :
Pd(acac)₂, PdCl₂, Pd(dba)₃*CH₃Cl (dba = dibenzylidèneacétone), Pd(OAc)₂, Pd(TFA)₂, Pd(CH₃CN)Cl₂.

3. Procédé selon l'une quelconque des revendications 1 ou 2, le composé dans l'étape de procédé b) étant Pd(OAc)₂.

4. Procédé selon l'une quelconque des revendications 1 à 3,
le procédé comprenant l'étape de procédé supplémentaire f) :
f) ajout d'un acide.

5. Procédé selon la revendication 4,
l'acide dans l'étape de procédé f) étant choisi parmi : H₂SO₄, CH₃SO₃H, CF₃SO₃H, PTSA.

6. Procédé selon l'une quelconque des revendications 4 ou 5,
l'acide dans l'étape de procédé f) étant PTSA.

7. Procédé selon l'une quelconque des revendications 1 à 6,
R¹, R², R³, R⁴ à chaque fois indépendamment les uns des autres étant choisis parmi : -C₁₋₁₂-alkyle, -O-C₁₋₁₂-alkyle, -C₄₋₁₄-aryle, -O-C₄₋₁₄-aryle, cycloalkyle, -C₁₋₁₂-hétéroalkyle, -O-C₁₋₁₂-hétéroalkyle, -C₃₋₁₄-hétéroaryle, -O-C₃₋₁₄-hétéroaryle, -COO-alkyle, -COO-aryle, -C-O-alkyle, -C-O-aryle, NH₂, halogène et les radicaux étant aussi aptes à la formation d'un cycle condensé plus grand ;
les groupes alkyle, aryle, cycloalkyle, hétéroalkyle, hétéroaryle mentionnés pouvant être substitués comme suit :
-C₁₋₁₂-alkyle, -O-C₁₋₁₂-alkyle, halogène ;
et au moins un des radicaux R¹, R², R³, R⁴ ne représentant pas phényle.

8. Procédé selon l'une quelconque des revendications 1 à 7,
R¹, R², R³, R⁴ à chaque fois indépendamment les uns des autres étant choisis parmi : -C₁₋₁₂-alkyle, -C₄₋₁₄-aryle, cycloalkyle, -C₁₋₁₂-hétéroalkyle, -C₃₋₁₄-hétéroaryle, halogène et les radicaux étant aussi aptes à la formation d'un cycle condensé plus grand ;
les groupes alkyle, aryle, cycloalkyle, hétéroalkyle, hétéroaryle mentionnés pouvant être substitués comme suit :
-C₁₋₁₂-alkyle, -O-C₁₋₁₂-alkyle, halogène ;
et au moins un des radicaux R¹, R², R³, R⁴ ne représentant pas phényle.

9. Procédé selon l'une quelconque des revendications 1 à 8,
R¹, R², R³, R⁴ à chaque fois indépendamment les uns des autres étant choisis parmi : -C₁₋₁₂-alkyle, cycloalkyle, -C₃₋₁₄-hétéroaryle et les radicaux étant aussi aptes à la formation d'un cycle condensé plus grand ;
les groupes alkyle, cycloalkyle, hétéroaryle mentionnés pouvant être substitués comme suit :
-C₁₋₁₂-alkyle, -O-C₁₋₁₂-alkyle, halogène ;
et au moins un des radicaux R¹, R², R³, R⁴ ne représentant pas phényle.

10. Procédé selon l'une quelconque des revendications 1 à 9,
R¹, R⁴ à chaque fois indépendamment l'un de l'autre étant choisis parmi : -C₁₋₁₂-alkyle, cycloalkyle et les radicaux étant aussi aptes à la formation d'un cycle condensé plus grand ;
les groupes alkyle, cycloalkyle mentionnés pouvant être substitués comme suit :
-C₁₋₁₂-alkyle, -O-C₁₋₁₂-alkyle, halogène.

11. Procédé selon l'une quelconque des revendications 1 à 10,
R², R³ à chaque fois indépendamment l'un de l'autre représentant -C₃₋₁₄-hétéroaryle,
les groupes hétéroaryle mentionnés pouvant être substitués comme suit :
-C₁₋₁₂-alkyle, -O-C₁₋₁₂-alkyle, halogène.

12. Procédé selon l'une quelconque des revendications 1 à 11,
le composé de formule générale (I) étant choisi parmi les structures (1) à (3) :

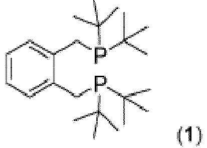

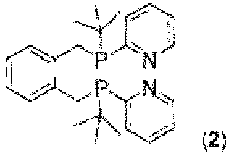

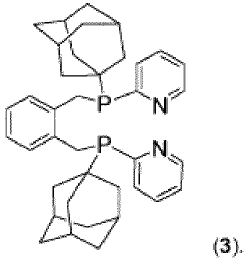

13. Procédé selon l'une quelconque des revendications 1 à 12,
le composé de formule générale (I) étant la structure (2) :

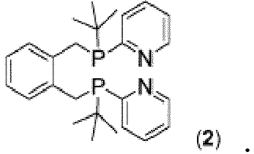

14. Procédé selon l'une quelconque des revendications 1 à 12,
le composé de formule générale (I) étant la structure (3) :
